# EUROPEAN PATENT SPECIFICATION

(11) **EP 3 694 735 B1**
(45) Date of publication and mention of the grant of the patent: **13.09.2023**
(21) Application number: 18866284.5
(22) Date of filing: 09.10.2018
(51) Int. Cl.: B60J 1/00, B60J 1/02, C03C 27/12, G02B 1/118, B32B 17/10, G02B 27/01

(54) **HEAD-UP DISPLAY WITH IMPROVED ANTI-REFLECTION FUNCTIONAL COATING ON WINDSHIELD**
HEAD-UP-ANZEIGE MIT VERBESSERTER FUNKTIONELLER ENTSPIEGELUNGSBESCHICHTUNG AUF DER FRONTSCHEIBE
DISPOSITIF D'AFFICHAGE TÊTE-HAUTE À REVÊTEMENT FONCTIONNEL ANTIREFLET AMÉLIORÉ SUR PARE-BRISE

(30) Priority: 10.10.2017 US 201762570490 P; 25.01.2018 US 201862621823 P
(43) Date of publication of application: 19.08.2020
(73) Proprietor: Central Glass Co., Ltd., Ube-shi, Yamaguchi 755-0001 (JP)
(72) Inventor: BARD, Michael, Primm Springs TN 38476 (US); HASE, Hiromi, Kawagoe City Saitama 350-1159 (JP)
(74) Representative: Mewburn Ellis LLP
(86) International application number: PCT/US2018/054959
(87) International publication number: WO 2019/074897

(56) References cited:
- WO-A1-2015/199027
- ES-A2- 2 406 205
- US-A1- 2009 303 604
- US-A1- 2010 253 601
- US-A1- 2013 067 957
- US-A1- 2013 215 513
- US-A1- 2013 233 018
- US-A1- 2016 002 498
- US-A1- 2017 242 247
- TOLGA AYTUG ET AL: "Monolithic graded-refractive-index glass-based antireflective coatings: broadband/omnidirectional light harvesting and self-cleaning characteristics", JOURNAL OF MATERIALS CHEMISTRY C, vol. 3, no. 21, 1 January 2015 (2015-01-01), pages 5440-5449, XP055592691, GB ISSN: 2050-7526, DOI: 10.1039/C5TC00499C
- AYTUG et al.: "Monolithic graded-refractive-index glass-based antireflective coatings: broadband/omnidirectional light harvesting and self-cleaning characteristics", Journal of Materisl Chemistry C, vol. 3, no. 21, 2015, pages 5440-5449, XP055592691,
- Anonymous: "High- power impulse magnetron sputtering", Wikipedia, the free encyclopedia, 25 May 2017 (2017-05-25), page 1, XP055592838, Retrieved from the Internet: URL:https://en.wikipedia.org/w/index.php?t itle=High-power_impulse_magnetron_sputteri ng&oldid=782190507 [retrieved on 2018-12-11]

## Description

### Technical Fields

The present disclosure generally relates to coatings for transparent articles such as a glass substrate for use with head-up display technologies. Among other things, the disclosed coatings have improved anti-reflective functionality, based on nano-structured thin film.

### Background

Head-up displays (HUD) are used in vehicles to project an image so that a driver may see the image without averting their eyes from the windshield in front of them. HUD displays typically include a projector and reflect a projected image off of the windshield to create an image for the driver. The windshield, however, has two reflective surfaces and multiple images may be formed by a single projector. A weaker ghost image may be formed, creating a hazy projected image.

Wedge shaped polymer interlayers have been used to address this problem by aligning the two images so that there is a single image to the driver. However, the wedge shape is not adjustable, and the images are aligned only for drivers of a particular height. There is a need in the art for a widely applicable solution for HUD displays. Particularly, there is a need for drivers of any height to see an image and for the ability to use multiple projectors to create a more complex display.

Automotive glass windows, particularly windshields, are subject to physical and chemical elements. Thus, exposed surfaces must exhibit durability to withstand such elements. Coatings for automotive uses must also provide required light transmission. Existing coatings do not provide durability when exposed to these elements.

The following disclosure is based, in part, on certain coating technology published by Oak Ridge National Laboratory (ORNL) in the non-patent literature, Aytug, T. et al., Journal of Materials Chemistry C, Vol. 3, No. 21, pp. 5440-5449 (2015). This publication generally discloses a nano-structured coating comprising an interconnected network of nanoscale pores surrounded by silica glass framework, created through metastable spinodal phase separation. Among other things, the literature also disclosed: "low-refractive index antireflective glass films that embody omni-directional optical properties over a wide range of wavelengths, while also possessing specific wetting capabilities." The surface microstructures may have a graded reflective index, providing antireflective characteristics, suppressing surface reflection. The surface chemistry may be adjusted to provide self-cleaning qualities and provide resistance to mechanical wear and abrasion. Further relevant prior art can be found in US2013/0233018.

### Summary of Disclosure

The invention is defined in the appended set of claims.

Disclosed herein are embodiments including a method of manufacturing a vehicle windshield for a head-up display (HUD) system, the method comprising forming a coating on a supporting substrate, heating the coating and the supporting substrate at a determined temperature for a period of time to both heat treat the supporting substrate and cause phase separation in the coating, wherein heat treating the supporting substrate comprises at least one of bending the supporting substrate or tempering the supporting substrate, and etching the coating.

In certain embodiments, heat treating the supporting substrate may comprise bending the supporting substrate. In further embodiments, heat treating the supporting substrate may comprise tempering the supporting substrate, wherein phase separation of the coating occurs while the supporting substrate and the coating are heated, and then the supporting substrate and coating are cooled to temper the supporting substrate.

In further embodiments of the method, the coating may have an anti-reflective functionality and the coating may comprise nano-pores within the coating after etching. The coating includes a particle size of less than or equal to 400 nm. In certain embodiments, the etching may comprise determining an etching depth to control particle sizes of a nano-structured surface of the coating.

In certain embodiments, heating the coating and the supporting substrate may comprise exposing the coating and the supporting substrate to heat from 560°C to 700°C and holding the coating and the supporting substrate at a peak temperature from 10 to 15 minutes. In some embodiments, the coating and the supporting substrate may be heated at 700°C for at least 10 minutes. Etching the coating may provide a nano-structured coating that has a base at the supporting substrate and a surface opposite the base, wherein the nano-structured coating comprises nano-pores which decrease in size from the surface towards the base of the nano-structured coating.

In further embodiments, etching may comprise partially etching the precursor coating with a first etchant, removing the first etchant, further etching the precursor coating with a second etchant, and removing the second etchant, wherein the second etchant is weaker than the first etchant.

In some embodiments, the precursor coating may be applied by physical vapor deposition onto the supporting substrate, wherein the supporting substrate is flat.

In certain embodiments, the supporting substrate may comprise soda-lime-silica glass.

In further embodiments, the phase separation may comprise spinodal decomposition.

Disclosed herein is a vehicle windshield for a head-up display (HUD) system, comprising a first glass substrate having surfaces S1 and S2, wherein S1 faces a vehicle exterior, and a second glass substrate having surfaces S3 and S4, wherein S4 faces a vehicle interior, wherein the first and second glass substrates are substantially parallel and spaced apart from each other with at least one polymer interlayer therebetween, and a first nano-structured coating on at least one of S1 or S4, wherein the first nano-structured coating has a particle size of less than or equal to 400 nm and the first nano-structured coating is from 50 nm to 1 µm thick, wherein the vehicle windshield has a visible light transmittance of at least 70%.

In certain embodiments, the first nano-structured coating may be on S1. The windshield may further comprise a second nano-structured coating on S4, wherein the second nano-structured coating has a particle size of less than or equal to 400 nm, and a reflective coating between S4 and the second nano-structured coating.

In further embodiments, the polymer interlayer may have a substantially uniform thickness.

The first nano-structured coating may comprise nano-pores within the first nano-structured coating, wherein the nano-pores increase in size through the first nano-structured coating from the first glass substrate to a first coating surface opposite the first glass substrate. In further embodiments, the second nano-structured coating comprises nano-pores within the second nano-structured coating, wherein the nano-pores increase in size through the second nano-structured coating from the second glass substrate to a second coating surface opposite the first glass substrate.

In certain embodiments, the first nano-structured coating may reduce a reflection of light from the first glass substrate or the second glass substrate to less than 1%.

The windshield may further comprise a water repellent coating on the first nano-structured coating, wherein the first nano-structured coating with the water repellent coating has a water droplet contact angle greater than 150°. The contact angle for the first nano-structured coating is at least 150° after aluminum oxide is applied thereto at a rate of 5 gram/minute for 8 minutes at 40 km/hr.

In certain embodiments, there may be a water repellent coating on the second nano-structured coating, wherein the second nano-structured with the water repellent coating may have a water droplet contact angle greater than 150°. The contact angle for the second nano-structured coating is at least 150° after aluminum oxide is applied thereto at a rate of 5 gram/minute for 8 minutes at 40 km/hr.

In further embodiments, the second nano-structured coating over the reflective coating may be configured to achieve a selected reflectivity on the second glass substrate having the reflective coating such that an intensity aspect ratio between an image reflected off the second glass substrate having the reflective coating and a ghost image reflected off the first glass substrate is greater than 10:1.

According to the invention, the first nano-structured coating comprises silica-rich structures and sodium-borate-rich portions. Further, the windshield includes an undercoating comprising a passivation layer between the first nano-structured coating and the first glass substrate or the second glass substrate.

In further embodiments, the first and second glass substrates may comprise soda-lime-silica glass.

In some embodiments, the first nano-structured coating may be silica-based and may be physically vapor deposited onto the glass product.

Disclosed herein is a head-up display (HUD) system of a vehicle, comprising an image source configured to direct light rays corresponding to an image to be formed on a windshield of the vehicle, the windshield of the vehicle comprising a first glass substrate having surfaces S 1 and S2, wherein S 1 faces a vehicle exterior and a second glass substrate having surfaces S3 and S4, wherein S4 faces a vehicle interior, wherein the first and second glass substrates are substantially parallel and spaced apart from each other with at least one polymer interlayer therebetween, and a first nano-structured coating on at least one of S1 and S4, wherein the first nano-structured coating has a particle size of less than or equal to 400 nm and the first nano-structured coating is from 50 nm to 1 µm thick, wherein the windshield has a visible light transmittance of at least 70%. In certain embodiments, the first nano-structured coating is on S1.

Further embodiments include a second nano-structured coating on S4, wherein the second nano-structured coating may have a particle size of less than or equal to 400 nm, and an reflective coating between S4 and the second nano-structured coating.

In certain embodiments, the polymer interlayer may have a substantially uniform thickness.

In further embodiments, the first nano-structured coating may comprise nano-pores within the first nano-structured coating, wherein the nano-pores may increase in size through the first nano-structured coating from the first glass substrate to a first coating surface opposite the first glass substrate. In certain embodiments, the second nano-structured coating may comprise nano-pores within the second nano-structured coating, wherein the nano-pores increase in size through the second nano-structured coating from the second glass substrate to a second coating surface opposite the second glass substrate.

The first nano-structured coating may reduce reflection of light from the first glass substrate or the second glass substrate to less than 1%.

In further embodiments, the second nano-structured coating over the reflective coating may be configured to achieve a selected reflectivity on the second glass substrate having the reflective coating such that an intensity aspect ratio between an image reflected off the second glass substrate having the reflective coating and a ghost image reflected off the first glass substrate is greater than 10:1. Further, the windshield may include an undercoating comprising SiO₂ between the first nano-structured coating and the first glass substrate or the second glass substrate.

Further disclosed herein is a vehicle windshield for a head-up display (HUD) system, comprising a first glass substrate having surfaces S1 and S2, wherein S 1 faces a vehicle exterior, a second glass substrate having surfaces S3 and S4, wherein S4 faces a vehicle interior, wherein the first and second glass substrates are substantially parallel and spaced apart from each other with at least one polymer interlayer therebetween, and a first nano-structured coating on at least one of S1 or S4, wherein the surface with the first nano-structured coating has a reflectivity of 1% or less from wavelengths 380 nm to 750 nm, wherein the reflectivity at an angle from -40° to 40° is within 1% of reflection at 0°, wherein the first nano-structured coating is substantially a single layer.

Disclosed herein is a head-up display system of a vehicle comprising an image source configured to direct light rays corresponding to an image to be formed on the vehicle windshield according to the aforementioned HUD system, wherein the image is projected in the field from - 40° to 40° from a driver's or passenger's eyes.

### Brief Description of the Drawings

The accompanying drawings, which are incorporated into and constitute a part of this specification, illustrate one or more example aspects of the present disclosure and, together with the detailed description, serve to explain their principles and implementations.
Fig. 1 illustrates a typical construction of a laminated glass utilized in automotive, architectural and other applications;
Fig. 2 illustrates a typical construction of a laminated glass with Infrared reflective (IRR) or conductive coating. Such coatings are on either S2 or S3 due to relatively lower durability. Fig. 2 is the example where the IRR or conductive coating is on S3;
Fig. 3 illustrates the ghosting problem for a head-up display (HUD) system with a standard vehicle windshield that has no wedge angle;
Fig. 4 illustrates a vehicle windshield with a wedge angle (α) to reduce the ghosting effect in a HUD system;
Fig. 5 illustrates an exponential relationship between reduction in S1 reflectivity and intensity aspect, based on 4% S4 reflectivity;
Fig. 6 illustrates a nano-structured coating is either on S1 or S4, according to an exemplary aspect of the present disclosure. Fig. 6 shows an embodiment where the improved anti-reflective coating is on S1. Infrared reflective coating is applicable as an option on either S2 or S3;
Fig. 7 illustrates the creation of an image reflected from a laminated glass windshield having a nano-structured coating on S1;
Fig. 8 shows an exponential relationship between reduction in S1 reflectivity and intensity aspect, based on an optimized 12% S4 reflectivity;
Fig. 9 shows a nano-structured coating on both S1 and S4, according to an exemplary aspect of the present disclosure. Relying on the high durability of the nano-structured coating as a top coat, a reflective functional coating is on S4;
Fig. 10 illustrates the creation of an image reflected from a laminated glass windshield having a nano-structured coating on both S1 and S4 and further having an infrared reflective functional coating on S4; and
Fig. 11 shows an example method of manufacturing a vehicle windshield for a HUD system, in accordance with aspects of the present disclosure.

### Detailed Description

Disclosed herein are exemplary aspects of an improved anti-reflective functional coating for automotive glazing. In the following description, for purposes of explanation, specific details are set forth in order to promote a thorough understanding of one or more aspects of the disclosure. It may be evident in some or all instances, however, that many aspects described below can be practiced without adopting the specific design details described below.

The development of the technology for utilization of a nano-structured coating may enhance one over the other properties such as hydrophobicity and/or mechanical durability, while only some of the properties needed to support the following exemplary embodiments will be used. For example, the description of the anti-reflective coating may be limited to the necessary anti-reflective features of the nano-structured coating.

Embodiments disclosed herein may be used in any automotive glazing, including without limitation, windshields, backlites, sidelites, sunroofs, and other appropriate automotive glass surfaces. Herein, the term "nano-structured" may include structures having nano-sized physical features. This may include nano-sized porous structures formed in a coating material.

As used herein, the term "S1" may refer to the exterior glass substrate surface in an automotive application. The term "S4" may refer to the interior glass substrate surface of a laminated automotive glass product. "S2" may be a glass substrate surface opposite S1 and "S3" may be a glass substrate surface opposite S4. In a laminated glass product, S2 and S3 may be a part of the laminate interior. S2 may be an interior glass substrate surface in automotive constructions using a single glass sheet, including a tempered glass sheet.

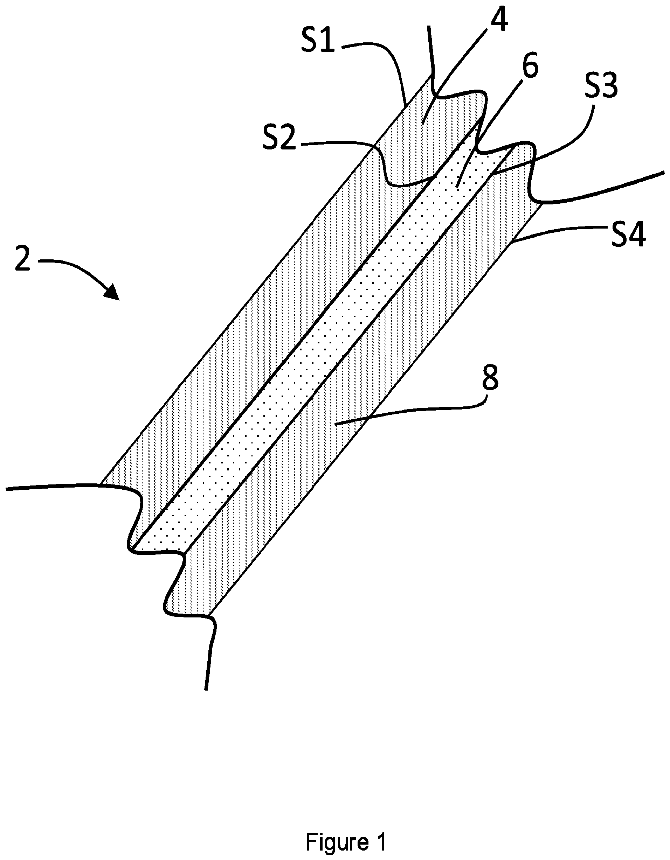

Referring to FIG. 1, a cross-sectional view of a conventional vehicle windshield 2 may include both a first glass substrate 4 and a second glass substrate 8 provided in a substantially parallel, spaced-apart relation to one another. First glass substrate 4 may face a vehicle exterior and include surfaces S1 and S2. Second glass substrate 8 may face a vehicle interior and include surfaces S3 and S4. Glass substrates 4 and 8 may be initially flat and may be heat treated (e.g., thermally tempered, heat bent, and/or heat strengthened), typically at temperatures of at least 500 deg. C., and more preferably at least about 600 deg. C. During this heat treatment, in certain example applications, the glass substrates 4 and 8 may be bent to a desired curved shape for a particular application. Glass bending preferably occurs at temperatures from 560 deg. C. to 700 deg. C., more preferably from 600 deg. C. to about 660 deg. C.

A polymer interlayer 6, which may include polyvinyl butyral (PVB) or any other suitable polymer-based laminating material, including ethyl vinyl acetate (EVA) or polyethylene terephthalate (PET), may be provided to laminate glass substrates 4 and 8 to one another. In a laminating process, which may typically involve autoclaving, the two glass substrates 4 and 8 with the polymer interlayer 6 therebetween may be heated to at least one selected laminating temperature under at least one selected laminating pressure (for example, without limitation, 110 - 160 deg. C. and 10 - 15 bar) to laminate the glass substrates 4, 8 to one another and form the vehicle windshield 2 or another laminated window product such as a sunroof or backlite. The first and second parallel, spaced apart glass substrates 4 and 8 may sandwich the polymer-inclusive interlayer 6, which may be substantially uniform in thickness, in the assembled windshield 2.

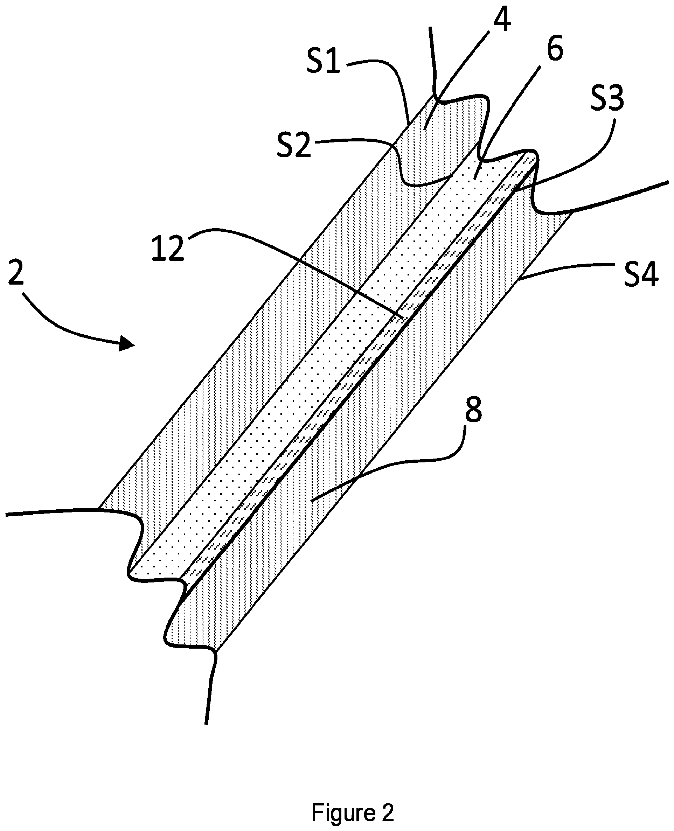

Many windshields 2 may include functional interlayers or coatings such as an infrared reflecting (IRR) coating or Low-emissivity (Low-E) coating. IRR coating may include, without limitation, metallic silver layer. For example, as shown in FIG. 2, a functional coating 12 for reducing ultraviolet (UV) and/or Infrared (IR) radiation may be applied on either the S2 or S3 surface of the glass substrates 4 and 8, respectively. The coating on S2 or S3 may be protected by the glass substrates 4, 8 from physical and chemical elements the laminate may be exposed to. Various applications may prefer some functional coatings over others.

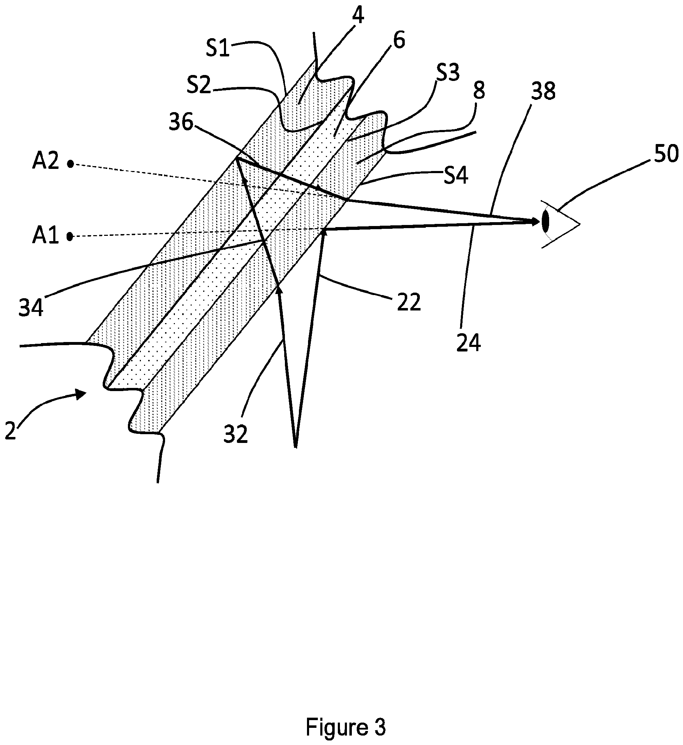

Recently, automotive windshields 2 designed for use with head-up displays (HUD) are becoming more and more prevalent. It is known that a HUD system may be used to provide transparent displays that present data without requiring a driver of a vehicle to look away from a usual field of view (*e.g*., a virtual image). More specifically, as shown in FIG. 3, a HUD system may use a projector located in a dashboard to project an image which, when reflected on the windshield 2, appears like a virtual image A1 on top of the hood of the vehicle. The HUD system may be located in the dashboard on a driver's side of the vehicle, such that the image A1 is visible to the driver. The HUD system may include an image light source with a display and may include one or more curved mirrors placed to project an image onto the windshield 2. The projection may be reflected off the windshield 2 enabling the driver to see a virtual image A1 floating in space just above the steering wheel at a perceived distance of about 2.0 - 2.5 meters in front of the driver. The HUD system may display important information to the driver, including vehicle speed, warning signals from the engine management system, fuel gauge and tire pressure readings, navigation system information, and may highlight impending road obstacles or lane edges when the vehicle travels around sharp curves in the road. The HUD system thus may allow drivers to stay focused on the road without glancing at the instrument panel or navigation system to obtain important driving information.

As shown in FIG. 3, a laminated glass construction may result in more than one reflection of the image A1, A2, preventing a clear image. For example, light 22, 32 emitted from an image source of the HUD system may be reflected into the driver's eyes 50 from the inner S4 and outer S1 air interfaces of the windshield 2 and may create a virtual image A1 and a ghost image A2, respectively. The light 24 which is reflected off S4 may create a stronger reflected image A1. The light reflection 38 is a reflection off S1, and the light path 34, 36 through the glass lamination weakens the reflection provided to the driver's eyes 50 and the weaker reflection 38 may provide the ghost image A2. The ghost image A2 may be the same as image A1, however, the ghost image A2 may be in a slightly different location, creating a double-image, which is hazy and unclear to the driver.

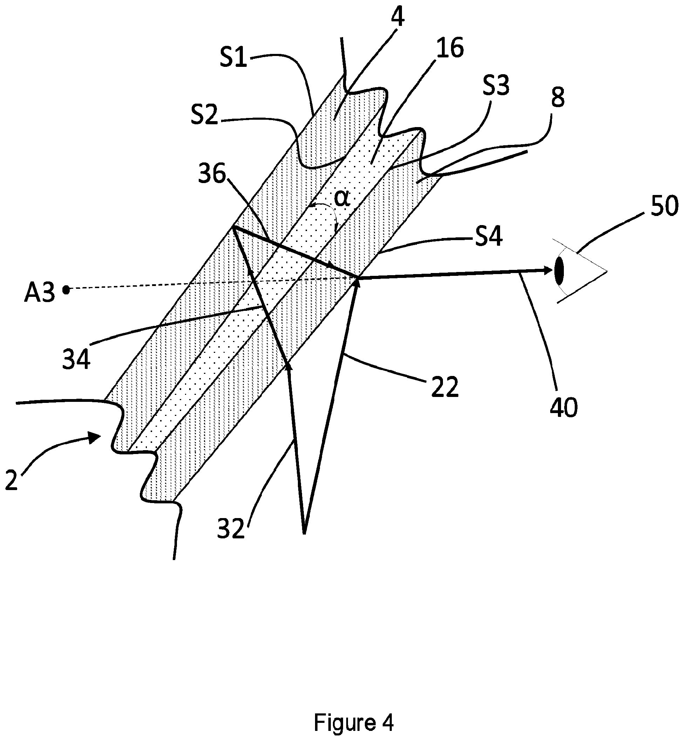

To eliminate this ghosting effect (double-image effect), as shown in FIG. 4, a HUD system utilizing the windshield 2 as a reflector may include a wedge-shaped interlayer 16 having wedge angle α to align the two reflected images 40 from S1 and S4, such that no disturbing "ghost" image may be created. The use of the interlayer 16 with a small wedge angle α may cause the virtual and ghost images to align to provide a single reflection 40 to the driver's eyes 50, resulting in a sharp image A3. Further, bending of the windshield 2 may also help reduce the ghosting effect. Such a HUD system, however, may only work for a small eye box (e.g., a driver head motion area that is usually about 5 lateral by 3 vertical by 6 longitudinal inches), within which the driver must be located in order to match both images on the retina of the driver's eye 50, avoiding a ghost image A2. Further, the optimum wedge angle α may be dependent on the location of the driver's eyes 50 and one wedge angle α in a windshield 2 may allow for only one projector-to-driver setup, in which the two virtual images align to a single reflection 40. In other words, a constant wedge angle α may only have an optimal effect for a single location of the driver, and taller or shorter drivers and passengers in the same vehicle may still experience the ghosting effect.

Thus, conventional wedge-based HUD systems may only be efficient to accommodate a small eye box of a driver, a virtual image may only be visible to the driver, very precise surface control for surfaces S1 and S4 and wedge angle α may be required, only one focal point and one projector may be possible per wedge angle α for a driver, and wedged windshields 2 may have a high production cost. Therefore, there is a need in the art for larger HUD images, multiple images per windshield 2, use of multiple projectors, preferably with different focal points, virtual and real images, and visibility for both a driver and passengers. Among other features, in accordance with aspects of the present disclosure, a nano-structured coating with an improved anti-reflective (AR) functionality and a glazing construction of the improved AR functionality for HUD on a vehicle windshield 2 may meet these needs in the art.

An anti-reflective coating 10 may reduce reflection by changing the optics of a glass substrate 4, 8 to present an effective reflective index of 1.0 at the substrate-air interface. A particular reflective index may be achieved by various methods, including incorporation of a multilayer interference filter or inclusion of a graded index of refraction. For the former approach, to create anti-reflective structures, multilayer interference coatings may be designed to create destructive interference between the reflected waves from different surfaces. Effective coatings may provide reflected waves that are 180° out of phase and the intensity of the reflected waves may be equal to that of the prior reflection wave. For the latter approach, graded index anti-reflective coatings may be configured to present a gradual change of an index of refraction to the incident field. If the index change is comparable to the wavelength of light over a distance, Fresnel reflection may be squelched. For example, a graded index of refraction may be formed by a porous film having a decreasing density of pores through a coating thickness or by a surface having cone shaped or pointed pillars or columns through a coating material, thereby grading the index of refraction. The density of pores may decrease through the coating thickness by providing relatively smaller pores at a base of the coating and larger pores at a surface of the coating opposite the base. Where pillars or columns may be formed in the coating, the spacing between pillars or columns may be less than the wavelength of visible light (400 nm) and the pillar or column height may also be less than the wavelength of visible light. Among other features, the present disclosure provides an improved AR functional coating 10 based, at least in part, on a nano-structured coating.

Moreover, the improved AR functional coating 10 of the present disclosure may facilitate a next generation HUD that may be configured to enhance multiple virtual images, avoid wedge construction weakness, gain advantage over p-polarized design, provide ghost-free pictures on complete glass surface, provide possible combination of virtual and real images, and display information at various intuitive focal points. In addition to vehicle windshield 2, the improved AR functional coating 10 may be applied to sunroof, back window (backlite), side door window (sidelite), or other appropriate glass portions of a vehicle.

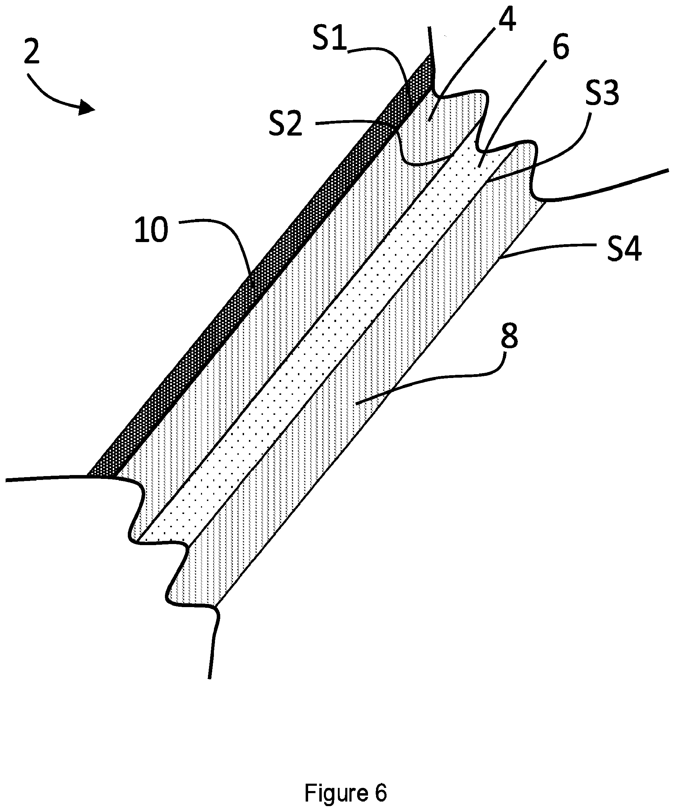

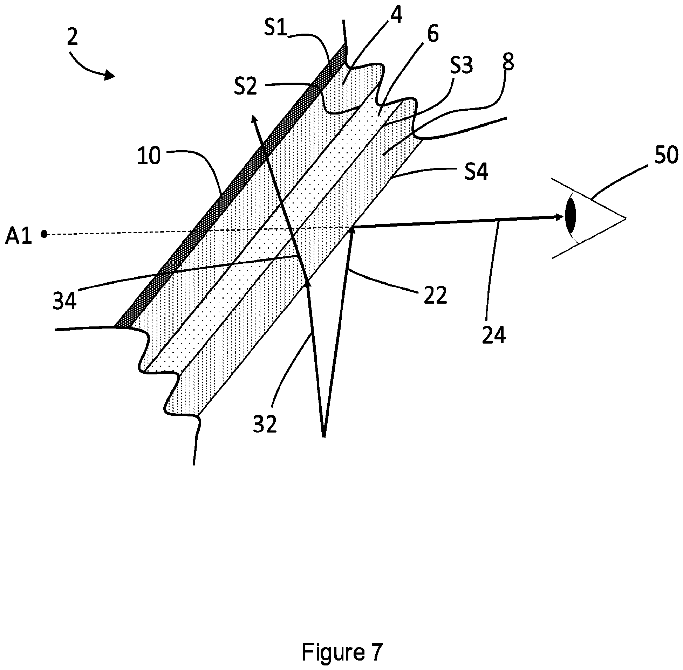

According to an embodiment of the present disclosure, by utilizing a nano-structured coating 10 with optimized and improved AR function on S1, as shown in FIG. 6, or S4, the ghost or second image in a HUD system may be reduced or eliminated. A wedge interlayer 16 may thus not be necessary to align two images A1, A2, as there is only one visible reflected image A1. Turning to FIG. 7, where the nano-structured coating 10 with AR functionality is on S1, the light path 32, 34 may not be reflected off S1 and may not create a second image. The light path 22 may be reflected off S4 and reflection 24 may be the only reflection reaching the driver's eyes 50 creating an image A1 without a second ghost image A2.

In some embodiments, the fabrication of the disclosed nano-structured coating 10 may begin with the deposition of a coating that may spinodally (*i.e*., non-nucleation, continuous phase separation) decompose when properly thermally processed. Specifically, the glass coating may be a composition of 66% SiO₂, 26% B₂O₃, and 8% Na₂O. Following film deposition by physical vapor deposition (PVD), which may include, without limitation, magnetron sputter coating, or chemical vapor deposition onto a transparent substrate platform 4, 8, a subsequent heat treatment may render the glass coating phase separated into an interpenetrating pattern including according to the invention sodium-borate-rich and a silica-rich phases, the former being relatively more soluble by a variety of chemicals. Sputter coating may be done in the presence of Ar and O₂ in a ratio of 3:1 and the transparent substrate 4, 8 may include soda lime glass. In certain embodiments, a glass composition may be, without limitation, a soda-lime-silica glass, which may be defined by ISO 16293-1:2008. The heat treatment may cause phase separation in the coating and heat treat the underlying substrate at the same time. The substrate 4, 8 may include a glass sheet which may be tempered or bent for a particular application. The tempering or bending process may require the glass substrate 4, 8 be heated. The heating may reach temperatures of at least 500 deg. C., and more preferably at least about 600 deg. C. Glass bending preferably occurs at temperatures from 560 deg. C. to 700 deg. C., more preferably from 600 deg. C. to about 660 deg. C. The glass substrate 4, 8 may be preferably held at such temperatures for 10 to 15 minutes. The coated substrate 4, 8 may be cooled after heat treatment.

After cooling the nano-structured coating 10, 62 and the substrate 4, 8, a controlled level of differential etching may be employed to selectively dissolve the sodium-borate-rich phase, leaving behind a three-dimensional reticulated network of high-silica content glass phase. Since the spinodal phase separation is a kinetically driven, diffusion-controlled process, for a given glass composition, the structure and dimensions of the resultant phases and matrix microstructure may be controlled by the heat treatment temperature and duration, combined with certain etch conditions (*i.e*., etchant type, concentration, and etch duration). Nano-sized pores formed by etching may preferably be less than 400 nm, more preferably less than 100 nm.

Chemical etching with a suitable etchant may dissolve the sodium-borate-rich phases, leaving interconnected silica-rich-phases. Any suitable etching chemical may be used, and include, without limitation, hydrogen fluoride buffered solutions, hydrochloric acid solutions, oxide solutions or sulfate solutions. The etched coating 10 may have a gradient pore size therethrough, having relatively larger pores at a surface level and smaller pores towards an underlying substrate 4, 8. The differential etching process may be chosen to provide a differential pore size within the coating 10. For example, in certain embodiments, a strong starting etching chemical, buffered oxide etchant, may be applied to the phase separated glass coating. The acid may be washed away to clear sodium-borate-rich phase from the coating prior to etching the entire thickness of the coating. The desired depth may depend on the total coating thickness and the desired steps of a gradient index of refraction. A further buffered solution of the strong etchant may then be applied to the partially etched coating for further etching. The further buffered solution may not be as reactive as the initial etchant and may not react as quickly with the sodium-borate-rich phase. The etching process may be repeated with a desired number of buffered solutions to create a gradient index of refraction. The weaker etchants may be removed before etching is complete and sodium-borate-rich phases may remain in the coating 10, particularly closer to an underlying substrate 4, 8 where smaller pores may be formed. A passivation layer, which includes SiO₂ TiO₂ or ZrO₂, is according to the invention applied between the underlying substrate 4, 8 and the nano-structured coating 10 to protect the substrate 4, 8 from residual sodium-borate-rich phases. The passivation layer may be 5 - 300 nm thick.

The nano-structured anti-reflective coating 10, having undergone differential etching, may have a porous structure, wherein interconnected pores may increase in size towards an underlying substrate 4, 8 and reduce reflectivity by up to 90% over the underlying substrate 4, 8. Soda-lime-silica glass may have a reflectivity of about 4% and the nano-structured anti-reflective coating 10 may provide 0.4% reflectivity on each coated surface. In a glass construct having the coated surface on both S1 and S4, the total reflectivity may become 0.6%. The reflectance may be determined by ISO 9050:2003. Particularly, a UV-Vis-NIR spectrophotometer with a tungsten lamp may be used for determining reflectivity. The reflection may be reduced for both direct and incident light. For instance, the antireflective coating may provide reflection at an angle ranging from -40° to 40° within 1% of reflection at 0°. The decreased reflectivity at an angle may allow for improved HUD application. The angle of reduced reflection may be suitable for projecting a HUD image. Thus, a HUD image may be projected from one or multiple projectors to a windshield 2 over a surface -40° to 40° from a driver's or passenger's eyes.

The coating 10 may be a suitable thickness to provide a gradient index of refraction with voids that may decrease in size from a surface to a base, wherein the base layer may be at an underlying substrate 4, 8, wherein the base may be opposite the coating surface. In one aspect, the coating thickness may be equal to or less than 1 µm, more preferably equal to or less than 400 nm. In another aspect, the coating thickness may be preferably at least 50 nm, more preferably at least 100 nm. The silica-based glass coating sputter coated onto a glass substrate 4, 8 may create a strong bond to the substrate 4, 8. Further, the nano-structured coating structures may be less than 400 nm and remain transparent, even at thicknesses above 400 nm. Thus, thick coatings may be possible without interfering with visible light transmission through an underlying substrate 4, 8, which may provide improved durability over existing coatings. The thick coating 10 may have a sponge-like structure of interconnected nano-structures which further may increase durability and resistance to impact of hard and sharp objects, such as stone or sand. The sponge-like nano-structure may absorb energy from the impact, protecting the underlying substrate 4, 8. The interconnected structure may not cleave off or easily break away from itself. Thus, the coating 10 may remain intact over the substrate 4, 8 even when exposing to various physical or chemical elements. Further, the porous structure of the nano-structured coating 10 may remain intact through subsequent heating, including autoclaving typical for glass constructions.

According to aspects of the present disclosure, a durable superhydrophobic coating may be applied to the nano-structured coating 10 to provide a water droplet contact angle greater than 150 degrees. Known water repellent functional liquids, such as fluoroalkyl silane compounds, perfluoropolyether silane compounds, alkyl silane compounds, silazane compounds, and silicone compounds, and coating processes such as dip coating, spin coating, spray coating, and nozzle flow coating followed by drying or firing processes may be used for a water repellent coating. The water droplet contact angle may be measured using an optical tensiometer and a 5 µl water droplet on a coated glass substrate 4, 8. The coated surface may remain superhydrophobic (contact angle ≥ 150 degrees) after abrasion treatment with aluminum oxide applied at a rate of 5 gram/minute for 2 minutes at 40 km/hr. Preferably, the contact angle may remain above 150 degrees after 8 minutes of such treatment. Thus, the coating 10 may be durable and suitable for application to S1 or S4.

Generally, in a HUD system, the reflection 38 from S1 may be about 50% weaker than the reflection 24 from S4 due to light transmission of close to 70% in a windshield 2, setting an intensity aspect ratio of roughly 2:1. The reflection from S1 may pass through the windshield 2 and weaken in intensity due to the reduced transmission therethrough before 34 and after 36 reflection from S1.

In accordance with aspects of the present disclosure, the improved nano-structured coating having AR functionality 10 may be on S1, as the S4 reflection 24 may be brighter than the S1 reflection 38 by approximately 50%. In order to function efficiently for eliminating ghost images, the intensity aspect ratio between the S4 image reflection 24 and the S1 ghost reflection 38 may be maximized. Referring to FIG. 3, the reflectivity in the visible light range may become 4% on S1 and S4. The ghost image A2 may have an intensity of about 2% due to a weaker reflection 38 and the intensity aspect ratio may be 2:1. The improved nano-structured coating having AR functionality 10 on S1 may reduce reflection 38 to less than 1%, for example, in the visible light range of 400 - 750 nm, preferably less than 0.6%, and more preferably less than 0.3% to eliminate a noticeable ghost image. The gradient index of refraction created by varying porous density in a coating 10 may provide the improved reflectivity. The more gradual a change in index of refraction, the more gradual a surface reflectivity may become.

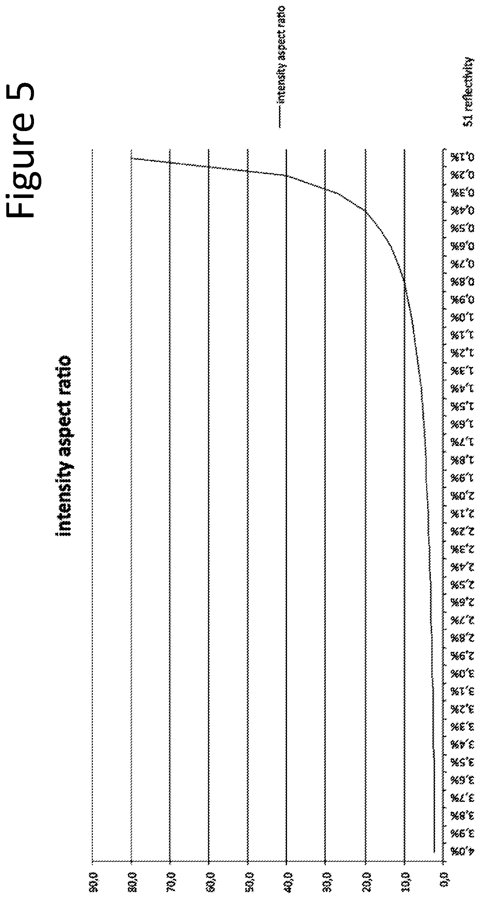

Where reflectivity in the visible light range is 0.8% on S1, a ghost image A2 may have an intensity of about 0.4% compared to 4% reflectivity on S4, yielding an intensity aspect ratio of 10:1. The image reflection A1 from S4 may be at least 10 times brighter than the ghost image A2. The intensity aspect ratio is shown in relation to S1 reflectivity in FIG. 5. Where reflectivity in the visible light range may be 0.2% on S1, the resulting ghost image A2 intensity may be about 0.1% versus 4% reflectivity of the primary image A1 on S4, yielding an intensity aspect ratio of 40:1. The image reflection of S4 A1 may be at least 40 times brighter than the ghost image A2.

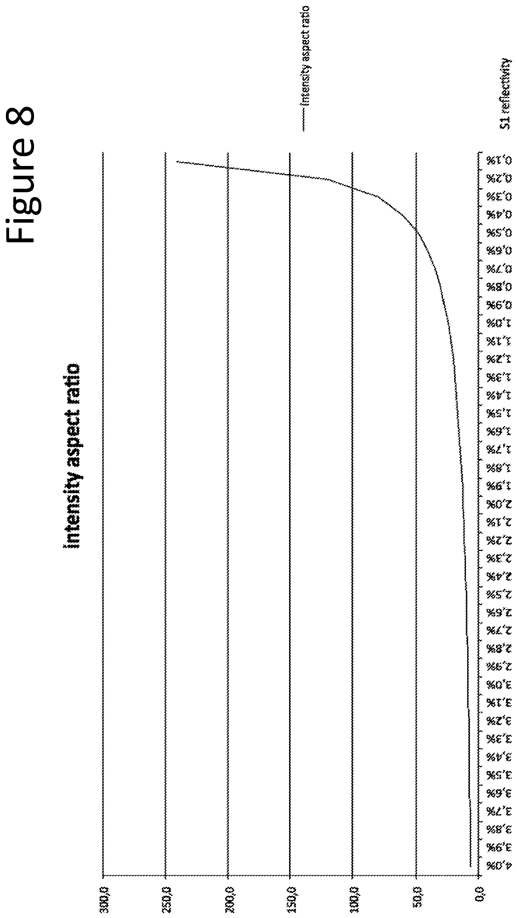

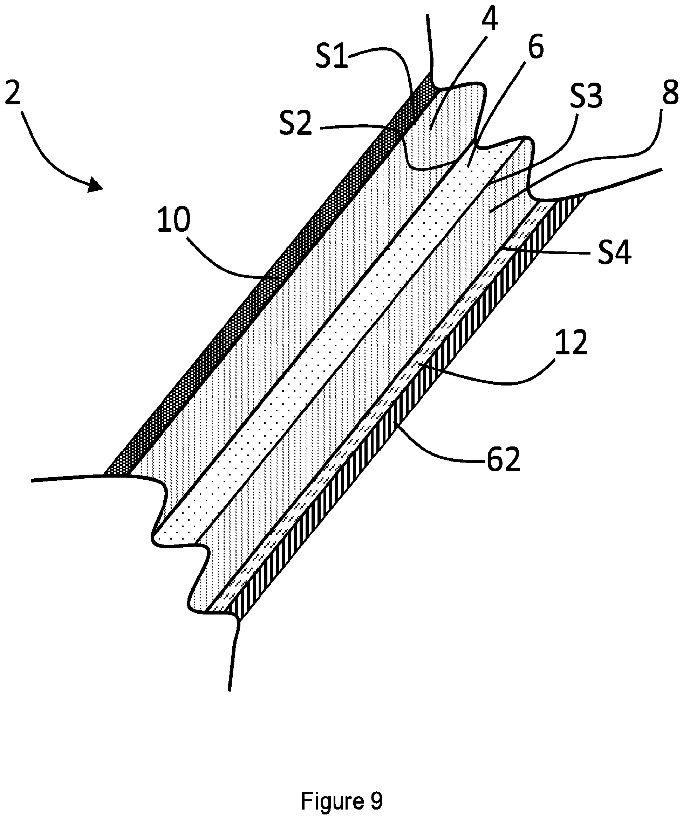

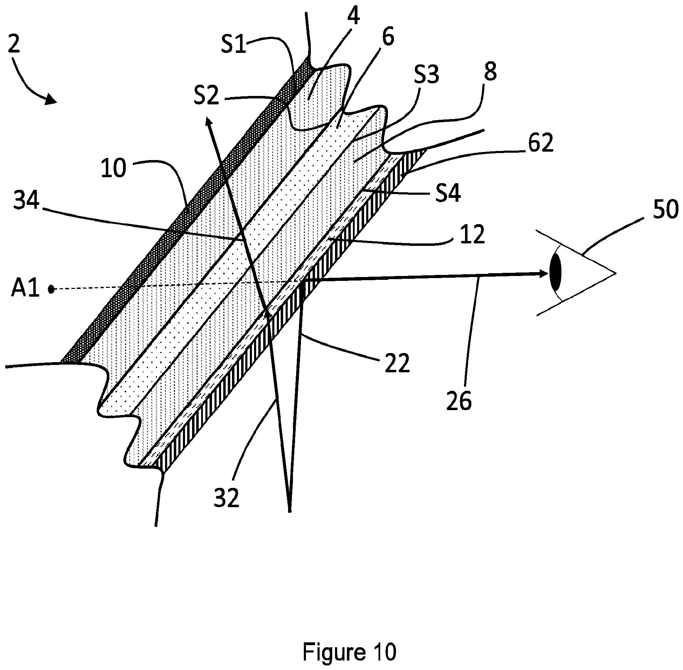

Referring to FIG. 9, another exemplary embodiment of the present disclosure may provide a construction of the windshield 2 with an improved nano-structured coating 10, 62 on S1 and S4, where the nano-structured coating may be used as a protective top coat 62 for infrared reflective (IRR) coating 12 on S4. IRR coatings reflect visible light as well as infrared light and may be used to enhance the visible light reflection 26 in a HUD system. Any suitable coating may be used on S4 to enhance visible light reflection 26, including IRR coatings 12 and reflective paints. In various embodiments, the nano-structured coating 10 on S1 may include a porous structure having a gradient of pore size or columns and pillars to create a gradient index of refraction. The nano-structured coating 62 may be a top coat for the IRR coating 12 that is the same or different from nano-structured coating 10. The IRR coating 12 may increase reflection 26 over reflection 24 from S4 without a coating and may further increase the intensity aspect ratio when compared to S1 reflectivity, as shown in FIGS. 8 and 10. Even where the nano-structured coating 62 may have anti-reflective properties, the IRR coating 12 reflectivity may overcome the lost reflection and provide a brighter reflected image 26.

IRR technologies utilized in architectural, automotive and other products may be achieved primarily through two methods of depositing coatings on glass surfaces: physical vapor deposition (PVD) or chemical vapor deposition (CVD). Thin film IRR coating stacks may include at least one metallic silver functional layer. Such IRR coating stacks may include a durable top coat layer which may provide protection against mechanical and chemical exposures during the manufacturing process to the final product.

Typical materials for protective top coats may include ZrSiAlNₓ, TiOₓ, SiOₓ, InOₓ, SiAlOₓ, ZnSnOₓ, SiAlOₓN_{y} and others. Such top coat layers may be used during the manufacturing process and may not be designed to provide permanent mechanical and chemical resistance against environmental influences. Thus, IRR coating stacks may be placed on S2 or S3 in a complex, expensive glass construction which may protect the IRR coating. To increase the brightness of a reflected image for HUD, the IRR coating 12 may be more efficient on an S1 or S4 surface where a reflection may be created, particularly on S4, where the reflection may not be diminished by passing through the glass glazing. However, a durable top coat 62 may be necessary to protect the IRR coating 12 on an outside surface of a glass glazing.

The nano-structured coating disclosed herein may provide a protective coating design in which very durable and thick nano-structured coating 62 may be suitable as a top coat for an IRR stack 12. The nano-particle size of the nano-structured coating 62 is less than 400 nm, such that the glass construction including such a coating has a total visible light transmission of at least 70%.

One of the advantages of the present disclosure may include that a thick nano-structured top coat layer 62 may be possible due to its AR features, as the top coat 62 may not absorb as much light as a typical top coat in the same layer thickness. Another advantage of the present disclosure may include that the AR property of the nano-structured coating 62 may increase light transmission which may be used by the IRR coating 12 for reflection in the desired wavelengths. Yet another advantage of the present disclosure may include that a nano-structured top coat layer 62 may be sufficiently durable to place the IRR coating 12 on S4, as shown in FIGS. 9 and 10.

While highly AR coatings on both S1 and S4 may eliminate any image reflection and prevent an effective HUD system, the IRR coating 12 on S4 may be optimized to reflect not only IR frequencies but also an increased amount of visible light. The increased light transmittance due to the anti-reflective coatings 10, 62 may provide more transmittance to provide a stronger IRR coating 12 and still provide 70% total visible transmittance in the glass glazing.

Commercial IRR coatings in automotive feature a visible reflectance of about 9 - 11%, including approximately 4% reflectance of the glass surfaces S1 and S4. As the AR coating 10, 62 may reduce the reflectance on S1 and S4 significantly, an IRR coating may be needed to provide the visible light reflectance and an image A1 for the driver in a HUD system. Where the IRR coating 12 may increase reflectance in the visible wavelengths by up to 8%, a total visible reflectance of about 13-15% may be yielded. This reflectance may be an improvement above an uncoated S4 surface and may provide an improved image A1, even having an anti-reflective coating. This coating may be applied across the whole windshield surface, or only partially, in areas used for HUD image reflection.

Through the increased reflectivity on S4, the intensity aspect ratio of reflected image A1 to ghost image A2 may further be increased and optimized as shown in FIG. 8.

For example, where reflectivity in the visible light range may be 0.2% on S1 and 13% on S4, ghost image A2 may have an intensity of about 0.1% versus 12% reflectivity of the primary image A1, yielding an intensity aspect ratio of 120:1. The image reflection A1 may be at least 120 times brighter than the ghost image A2. The reflectivity of the primary image A1 may be reduced a small amount by the nano-structured top coat 62 and may thus be reduced from 13% to 12% in the above example. The nano-structured top coat 62 may not require optimized anti-reflectivity and may be a different structure from the nano-structured anti-reflectivity coating 10. The top coat 62 may not have a gradient of pore size or a gradient of refractive index which may increase the reflectivity over a gradient top coat 10.

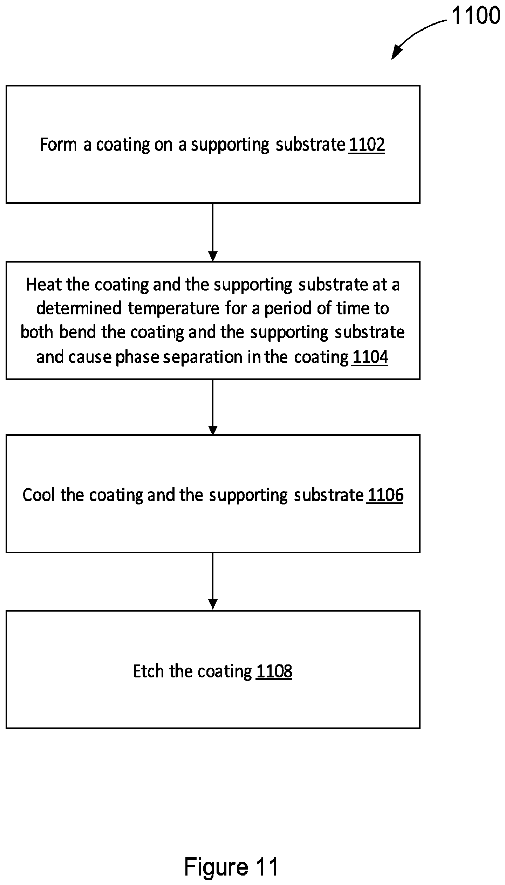

Turning to FIG. 11, the following describes examples as to how to make a stack with improved AR functionality based at least in part on the nano-structured coating. Various conditions contribute to characteristics of the coating and may be optimized to a particular substrate application.

The nano-structured coating 10, 62 disclosed herein may be adjusted for desired applications by altering the concentration and mix of glass types used, the duration and temperature during phase separation, and the etching depth. The coating material may be typically a composition comprising x% SiO₂, y% B₂O₃, and z% R₂O. Wherein R may be an alkali metal element such as Li (lithium), Na (sodium) or K (potassium). In certain embodiments, the alkali metal may preferably be Na. Wherein the sum of x, y, and z may be at least 95, preferably at least 99, and more preferably at least 99.5. Preferably, x may range from 60 to 70, y may range from 20 to 30 and z may range from 5 to 12. More preferably, x may range from 64 to 68, y may range from 24 to 28, and z may range from 6 to 10.

Optimizing the above process parameters to yield the exactly desired properties may be difficult in a monolithic coating design, such as in previous nano-structured coatings. For example, optimal AR properties may require a theoretically seamless transition from the surrounding element's refractive index (typically air) to the substrate's refractive index (typically soda lime glass). In a monolayer construction having uniform etching, only the phase separation and the depth of etching may define this transition which may lead to steps in refractive index too large to optimize the AR properties to the desired level. In another example, the coating's phase separation may occur during the heating cycle of a typical glass bending and/or stress setting (i.e., annealing or heat strengthening) process. Process requirements, including duration and temperature, for bending or stress setting may not overlap with requirements for phase separation, leading to a potentially incompatible set of process requirements.

In accordance with aspects of the disclosure, as shown in FIG. 11, a method 1100 of manufacturing a vehicle windshield 2 for a HUD system may comprise forming a coating 10, 62 on a supporting substrate 4, 8 1102, heating the coating 10, 62 and the supporting substrate 4, 8 at a determined temperature for a period of time to both bend the coating 10, 62 and the supporting substrate 4, 8 and cause phase separation in the coating 10, 62 1104, cooling the coating 10, 62 and the supporting substrate 4,8 1106, and etching the coating 10, 62 1108.

Where the coating 10, 62 may be chemically etched, the acid type and concentration, as well as the duration of the etching process, may affect the etched coating. A stronger acid or concentration may provide a larger pore or column size where a weaker acid may provide a smaller opening within coating material. Combinations of various acids may be used to chemically etch the coating material. A strong acid may be used on a coating and removed prior to etching the complete coating. A weaker acid may then be applied which may pass through pores created in the coating and may etch smaller pores in coating material closer to the glass substrate 4, 8. Materials used to etch the coating material may include, without limitation, hydrogen fluoride buffered solutions, hydrochloric acid solutions or sulfate solutions.

Another method to provide gradual changes in nano-structure size may include the utilization of multiple layers made up of different percentages of SiO₂, B₂O₃ and Na₂O. Different levels of phase separation may be achieved throughout varying coating compositions that may be exposed to a set temperature (*e.g*., >500°C) for a determined time for phase separation. Preferably, the percentage of SiO₂ may decrease from the first to the last deposited layer while B₂O₃ and Na₂O percentages may increase, where the first layer deposited may be the closest to the substrate 4, 8. The layers may be produced in-line in a suitable coating process, *i.e.,* in a sputter coater. For example, a glass substrate 4, 8 with a precursor coating (*i.e.,* before phase-separation) may be heat-treated at approximately 560 - 700°C for about 10 minutes (*e.g.*, the time and duration required for bending, tempering or heat-strengthening) to create a varying porosity through the layer stack after etching. More Si-rich phases may be the closest to the glass substrate 4, 8 and larger pores, where the sodium borate phase that may have been etched away may be located toward the top layer. Such heat-treatment may accomplish glass bending and phase-separation in the coating 10, 62 at the same time. It should be appreciated that the glass bending/tempering process may be configured based on: the specific thickness of the glass substrate 4, 8, where the bending process takes place (out-of-furnace or in-furnace), where the glass cooling process takes place, whether the final product is laminated glass or tempered glass, and transportation conditions. The etching depth may further control pore or column sizes and anti-reflective properties. At certain heat treatment temperatures and durations, various glass compositions (*e.g*., different concentrations and/or mixes of glass types used) may be used during a glass bending process to achieve different features. For example, such bending process may be configured to hold the glass substrate 4, 8 at a selected peak temperature for, *e.g.,* 10-15 minutes depending on specific manufacturing process.

The present disclosure further discloses another manufacturing method wherein multiple layers may not be produced in-line by a coater. The coating stack may be partially coated (1 or more layers with different glass concentrations), then heated to initiate phase separation and etched. After this first cycle, the process may be repeated with 1 or more additional layers coated onto the previously phase-separated and etched coating stack, the stack may be heat-treated again to initiate phase separation in the second coating stack and etched again. This process may be repeated multiple times in order to create a final coating with properties that may surpass a monolayer stack for anti-reflective (and/or other) properties.

Optionally, after the etching process, hydrophobic materials may be applied to a nano-structured coating 10, 62 surface. For example, without limitation, fluorine components, perfluoro polyether components, silicone, alkyl components, fluoroalkyl components, or silane coupling agents including self-assembled monolayer (SAM) may be applicable to the nano-structured coating 10, 62 to provide a hydrophobic surface.

In an exemplary embodiment, a glass composite of 66% SiO₂, 26% B₂O₃, and 8% Na₂O may be magnetron sputter coated onto a flat glass substrate 4 that is soda-lime-silica glass, in a layer 350 nm thick. A SiO₂ passivation layer may be on the flat glass substrate 4 prior to sputter coating the glass composite. The coated, flat glass substrate 4 may be then heated to 620 deg. C. The heating process may include gradually increasing and gradually decreasing temperature. The glass substrate 4 and coating may be heated at least 400 deg. C. for 14.8 minutes, at least 500 deg. C. for 10.85 minutes, and at least 600 deg. C. for 6.7 minutes. The glass substrate 4 may reach a maximum temperature of 659.5 deg. C. The process may take place in a furnace, which may include gravity sage bending, press bending, or combinations thereof, and includes bending the glass substrate 4 and coating. During the heating process, the coating phase may separate into silica-rich phases and sodium-borate-rich phases. Once the bent glass substrate 4 cools, the coating may be etched to remove the sodium-borate-rich phase from the coating.

Etching may be completed by applying a 10:1 buffered oxide etchant, including hydrogen fluoride and ammonium fluoride with deionized water, and removing the etchant after wet application for 20 seconds. A 20:1 buffered oxide etch may then be applied to the coating and removed after 20 seconds. Finally, a 30:1 buffered oxide etch may be applied to the coating and removed after 20 seconds. The etched coating 10 has a nano-structured surface, including pores sized under 400 nm. The soda-lime-silica glass surface with the nano-structured coating may have a reflectivity of 0.4%. The reflectivity may remain under 1.4% measured at angles ranging from -40 degrees to 40 degrees.

Once the coating 10 is etched, a water repellent coating, 1*H*, 1*H*, 2*H*, 2*H-*perfluorooctyltrichlorosilane hexane solution, may be applied to the nano-structured coating 10. A water droplet contact angle, measured using an optical tensiometer and a 5 µl water droplet on a coated glass substrate 4, may be measured at 156 degrees. After aluminum oxide may be applied at 40 km/hr at 5 gram/minute for 8 minutes, the contact angle may be 155 degrees.

To prepare the inner glass surface 8 having an IRR coating 12, the IRR coating 12 may be sputter coated onto the glass substrate 8 prior to sputter coating a SiO₂ glass over the IRR coating 12. The glass composite may then be applied and treated as described herein for the outer glass substrate 4. In the case of a coating on S4 over the IRR coating 12, the coating 62 may be etched by a single buffered solution (30:1 buffered oxide etch) for 1 minute for a 350 nm coating.

The glass substrates 4, 8, having etched coatings 10, may then be laminated together with a PVB interlayer. The resulting laminate may be installed as a windshield and used with at least one projector to provide an image on the windshield. The improved angle of anti-reflectivity may improve HUD images in front of the driver and at an angle from the driver, increasing the area of the windshield that may be utilized by one or more projectors.

The above description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Further, the above description in connection with the drawings describes examples and does not represent the only examples that may be implemented or that are within the scope of the claims.

Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the principles and novel features disclosed herein.

## Claims

1. A vehicle windshield (2) for a head-up display (HUD) system, comprising:
a first glass substrate (4) having surfaces S1 and S2, wherein surface S1 faces a vehicle exterior;
a second glass substrate (8) having surfaces S3 and S4, wherein surface S4 faces a vehicle interior, wherein the first and second glass substrates (4,8) are spaced apart from each other with at least one polymer interlayer (6) therebetween; and
a first nano-structured coating (10,62), on surface S1 or S4, **characterised in that**:
the first nano-structured coating comprises silica-rich structures and sodium-borate-rich portions;
the first nano-structured coating has a particle size of less than or equal to 400 nm;
the first nano-structured coating is from 50 nm to 1 µm thick;
the vehicle windshield (2) has a visible light transmittance of at least 70%; and
the vehicle windshield (2) further comprises an undercoating comprising a passivation layer containing SiO₂, TiO₂ or ZrO₂ between the first nano-structured coating (10,) and the respective glass substrate (4,8).

2. The vehicle windshield (2) according to claim 1, wherein the first nano-structured coating (10) is on surface S1.

3. The vehicle windshield (2) according to claim 2, further comprising:
a second nano-structured coating (62) on surface S4, wherein the second nano-structured coating has a particle size of less than or equal to 400 nm; and
a reflective coating (12) between surface S4 and the second nano-structured coating (62).

4. The vehicle windshield according to claims 1 to 3, wherein the or each said nano-structured coating (10,62) comprises nano-pores within the nano-structured coating,
wherein the nano-pores increase in size through the nano-structured coating, from the respective glass substrate (4,8) to a coating surface opposite the respective glass substrate.

5. The vehicle windshield according to claims 1 to 4, wherein the or each said nano-structured coating (10,62) reduces a reflection of light from the respective first glass substrate (4) or second glass substrate (8) to less than 1%.

6. The vehicle windshield according to claim 3, wherein the second nano-structured coating (62) over the reflective coating (12) is configured to achieve a selected reflectivity on the second glass substrate (8) having the reflective coating (12) such that an intensity aspect ratio between an image reflected off the second glass substrate (8) having the reflective coating (12) and a ghost image reflected off the first glass substrate (4) is greater than 10:1.

7. The vehicle windshield (2) according to any one of claims 1 to 6, wherein the or each surface (S1,S4) with a said nano-structured coating (10,62) has a reflectivity over angles ranging from -40° to 40° that is within 1% of its reflectivity at 0°.

8. A head-up display (HUD) system of a vehicle, comprising:
a windshield as defined in any one of claims 1 to 7; and
an image source configured to direct light rays corresponding to an image to be formed on the windshield of the vehicle.

9. A method of manufacturing the windshield according to any one of claims 1 to 7, the method comprising:
forming a precursor coating on the first or second glass substrate (4, 8);
heating the precursor coating and said glass substrate (4, 8) at a determined temperature for a period of time to both heat treat said glass substrate (4, 8) and cause phase separation in the precursor coating, wherein heat treating said glass substrate comprises at least one of bending said glass substrate or tempering said glass substrate; and
etching the precursor coating to provide the first nano-structured coating (10,62), **characterised in that**
the etching comprises: partially etching the precursor coating with a first etchant; removing the first etchant; further etching the precursor coating with a second etchant weaker than the first etchant; and removing the second etchant;
the precursor coating comprises silica-rich phases and sodium-borate-rich phases; and
the method further comprises applying the passivation film containing SiO₂, TiO₂ or ZrO₂ between the precursor coating and said glass substrate.

10. The method according to claim 9, wherein heat treating said glass substrate (4, 8) comprises tempering said glass substrate, wherein phase separation of the precursor coating occurs while said glass substrate (4, 8) and the precursor coating are heated, and then said glass substrate and precursor coating are cooled to temper said glass substrate.

11. The method according to claim 9 and 10, wherein the nano-structured coating (10, 62) has an anti-reflective functionality and the nano-structured coating comprises nano-pores within the nano-structured coating after the etching.

12. The method according to claim 11, wherein the etching comprises causing the nano-pores to decrease in size from a coating surface towards said glass substrate.

13. The method according to any one of claims 9 to 12, wherein the etching comprises determining an etching depth to control particle sizes of a nano-structured surface of the nano-structured coating (10, 62).

## Patentansprüche

1. Fahrzeugwindschutzscheibe (2) für ein Head-up-Display- (HUD-) System, die Folgendes umfasst:
ein erstes Glassubstrat (4) mit Oberflächen S1 und S2, wobei die Oberfläche S1 einem Fahrzeugäußeren zugewandt ist;
ein zweites Glassubstrat (8) mit Oberflächen S3 und S4, wobei die Oberfläche S4 einem Fahrzeuginneren zugewandt ist, wobei das erste und das zweite Glassubstrat (4, 8) voneinander beabstandet sind und zwischen einander zumindest eine Polymerzwischenschicht (6) aufweisen; und
eine erste Nanostrukturbeschichtung (10, 62) auf der Oberfläche S1 oder S4,
**dadurch gekennzeichnet, dass**:
die erste Nanostrukturbeschichtung siliziumdioxidreiche Strukturen und natriumboratreiche Abschnitte umfasst;
die erste Nanostrukturbeschichtung eine Teilchengröße von kleiner oder gleich 400 nm aufweist;
die erste Nanostrukturbeschichtung von 50 nm bis 1 µm dick ist;
die Fahrzeugwindschutzscheibe (2) einen Transmissionsgrad für sichtbares Licht von zumindest 70 % aufweist; und
die Fahrzeugwindschutzscheibe (2) ferner eine Unterschicht umfasst, die zwischen der ersten Nanostrukturbeschichtung (10) und dem entsprechenden Glassubstrat (4, 8) eine SiO₂, TiO₂ oder ZrO₂ enthaltende Passivierungsschicht umfasst.

2. Fahrzeugwindschutzscheibe (2) nach Anspruch 1, wobei die erste Nanostrukturbeschichtung (10) auf der Oberfläche S1 angeordnet ist.

3. Fahrzeugwindschutzscheibe (2) nach Anspruch 2, die ferner Folgendes umfasst:
eine zweite Nanostrukturbeschichtung (62) auf der Oberfläche S4, wobei die zweite Nanostrukturbeschichtung eine Teilchengröße von kleiner oder gleich 400 nm aufweist; und
eine reflektierende Beschichtung (12) zwischen der Oberfläche S4 und der zweiten Nanostrukturbeschichtung (62).

4. Fahrzeugwindschutzscheibe nach Anspruch 1 bis 3, wobei die oder jede Nanostrukturbeschichtung (10, 62) Nanoporen innerhalb der Nanostrukturbeschichtung umfasst,
wobei die Größe der Nanoporen in der Nanostrukturbeschichtung von dem entsprechenden Glassubstrat (4, 8) aus zu einer dem entsprechenden Glassubstrat entgegengesetzten Beschichtungsfläche hin zunimmt.

5. Fahrzeugwindschutzscheibe nach Anspruch 1 bis 4, wobei die oder jede Nanostrukturbeschichtung (10, 62) eine Reflexion von Licht aus dem entsprechenden ersten Glassubstrat (4) oder zweiten Glassubstrat (8) auf weniger als 1 % verringert.

6. Fahrzeugwindschutzscheibe nach Anspruch 3, wobei die zweite Nanostrukturbeschichtung (62) über der reflektierenden Beschichtung (12) dazu ausgelegt ist, einen ausgewählten Reflexionsgrad auf dem zweiten Glassubstrat (8), das die reflektierende Beschichtung (12) aufweist, derart zu erreichen, dass ein Intensitätsaspektverhältnis zwischen einem von dem zweiten Glassubstrat (8), das die reflektierende Beschichtung (12) aufweist, reflektierten Bild und einem von dem ersten Glassubstrat (4) reflektierten Geisterbild größer als 10:1 ist.

7. Fahrzeugwindschutzscheibe (2) nach einem der Ansprüche 1 bis 6, wobei die oder jede Oberfläche (S1, S4) mit einer Nanostrukturbeschichtung (10, 62) einen Reflexionsgrad über Winkel von -40 ° bis 40 ° aufweist, der unter 1 % ihres Reflexionsgrads bei 0 ° liegt.

8. Head-up-Display- (HUD-) System eines Fahrzeugs, das Folgendes umfasst:
eine Windschutzscheibe wie in einem der Ansprüche 1 bis 7 definiert; und
eine Bildquelle, die dazu ausgelegt ist, Lichtstrahlen, die einem auf der Windschutzscheibe des Fahrzeugs auszubildenden Bild entsprechen, zu lenken.

9. Verfahren zur Herstellung einer Windschutzscheibe nach einem der Ansprüche 1 bis 7, wobei das Verfahren Folgendes umfasst:
Ausbilden einer Vorläuferbeschichtung auf dem ersten oder zweiten Glassubstrat (4, 8);
Erhitzen der Vorläuferbeschichtung und des Glassubstrats (4, 8) bei einer vorbestimmten Temperatur über einen Zeitraum hinweg, um sowohl das Glassubstrat (4, 8) wärmezubehandeln als auch eine Phasentrennung in der Vorläuferbeschichtung zu bewirken, wobei das Wärmebehandeln des Glassubstrats zumindest eines aus Biegen des Glassubstrats oder Härten des Glassubstrats umfasst; und
Ätzen der Vorläuferbeschichtung, um die erste Nanostrukturbeschichtung (10, 62) bereitzustellen, **dadurch gekennzeichnet, dass**
das Ätzen Folgendes umfasst: teilweises Ätzen der Vorläuferbeschichtung mit einem ersten Ätzmittel; Entfernen des ersten Ätzmittels; weiteres Ätzen der Vorläuferbeschichtung mit einem zweiten Ätzmittel, das schwächer als das erste Ätzmittel ist; und Entfernen des zweiten Ätzmittels;
wobei die Vorläuferbeschichtung siliziumdioxidreiche Phasen und natriumboratreiche Phasen umfasst; und
wobei das Verfahren ferner das Aufbringen des SiO₂, TiO₂ oder ZrO₂ enthaltenden Passivierungsfilms zwischen der Vorläuferbeschichtung und dem Glassubstrat umfasst.

10. Verfahren nach Anspruch 9, wobei das Wärmebehandeln des Glassubstrats (4, 8) das Härten des Glassubstrats umfasst, wobei die Phasentrennung der Vorläuferbeschichtung erfolgt, wenn das Glassubstrat (4, 8) und die Vorläuferbeschichtung erhitzt werden, und anschließend das Glassubstrat und die Vorläuferbeschichtung gekühlt werden, um das Glassubstrat zu härten.

11. Verfahren nach Anspruch 9 und 10, wobei die Nanostrukturbeschichtung (10, 62) eine Antireflexionsfunktion aufweist und die Nanostrukturbeschichtung nach dem Ätzen Nanoporen innerhalb der Nanostrukturbeschichtung umfasst.

12. Verfahren nach Anspruch 11, wobei das Ätzen das Bewirken einer Verringerung der Größe der Nanoporen von einer Beschichtungsoberfläche aus zu dem Glassubstrat hin umfasst.

13. Verfahren nach einem der Ansprüche 9 bis 12, wobei das Ätzen das Bestimmen einer Ätztiefe zum Steuern von Teilchengrößen einer Nanostrukturoberfläche der Nanostrukturbeschichtung (10, 62) umfasst.

## Revendications

1. Pare-brise de véhicule (2) pour un système d'affichage tête haute (HUD), comprenant :
un premier substrat de verre (4) présentant des surfaces S1 et S2, dans lequel la surface S1 fait face à l'extérieur du véhicule ;
un second substrat de verre (8) présentant des surfaces S3 et S4, dans lequel la surface S4 fait face à l'intérieur du véhicule, dans lequel les premier et second substrats de verre (4, 8) sont espacés l'un de l'autre avec au moins une couche intermédiaire de polymère (6) entre ceux-ci ; et
un premier revêtement nanostructuré (10,62), sur la surface S1 ou S4, **caractérisé en ce que** :
le premier revêtement nanostructuré comprend des structures riches en silice et des parties riches en borate de sodium ;
le premier revêtement nanostructuré présente une taille de particule inférieure ou égale à 400 nm ;
le premier revêtement nanostructuré présente une épaisseur de 50 nm à 1 µm ;
le pare-brise de véhicule (2) présente un facteur de transmission de lumière visible d'au moins 70 % ; et
le pare-brise de véhicule (2) comprend en outre une sous-couche comprenant une couche de passivation contenant du SiO₂, du TiO₂ ou du ZrO₂ entre le premier revêtement nanostructuré (10) et le substrat de verre respectif (4, 8).

2. Pare-brise de véhicule (2) selon la revendication 1, dans lequel le premier revêtement nanostructuré (10) est sur la surface S1.

3. Pare-brise de véhicule (2) selon la revendication 2, comprenant en outre :
un second revêtement nanostructuré (62) sur la surface S4, dans lequel le second revêtement nanostructuré présente une taille de particule inférieure ou égale à 400 nm ; et
un revêtement réfléchissant (12) entre la surface S4 et le second revêtement nanostructuré (62).

4. Pare-brise de véhicule selon les revendications 1 à 3, dans lequel le ou chaque revêtement nanostructuré (10, 62) comprend des nanopores à l'intérieur du revêtement nanostructuré, dans lequel les nanopores augmentent en taille à travers le revêtement nanostructuré, du substrat de verre respectif (4, 8) à une surface de revêtement opposée au substrat de verre respectif.

5. Pare-brise de véhicule selon les revendications 1 à 4, dans lequel le ou chaque revêtement nanostructuré (10, 62) réduit une réflexion de lumière à partir du premier substrat de verre respectif (4) ou du second substrat de verre respectif (8) à moins de 1 %.

6. Pare-brise de véhicule selon la revendication 3, dans lequel le second revêtement nanostructuré (62) au-dessus du revêtement réfléchissant (12) est configuré pour obtenir une réflectivité sélectionnée sur le second substrat de verre (8) présentant le revêtement réfléchissant (12) de telle sorte qu'un rapport d'aspect d'intensité entre une image réfléchie sur le second substrat de verre (8) présentant le revêtement réfléchissant (12) et une image fantôme réfléchie sur le premier substrat de verre (4) est supérieur à 10:1.

7. Pare-brise de véhicule (2) selon l'une quelconque des revendications 1 à 6, dans lequel la ou chaque surface (S1,S4) avec ledit revêtement nanostructuré (10, 62) présente une réflectivité sur des angles allant de -40° à 40°, c'est-à-dire dans les 1% de sa réflectivité à 0°.

8. Système d'affichage tête haute (HUD) d'un véhicule, comprenant :
un pare-brise tel que défini selon l'une quelconque des revendications 1 à 7 ; et
une source d'image configurée pour diriger des rayons lumineux correspondant à une image à former sur le pare-brise du véhicule.

9. Procédé de fabrication du pare-brise selon l'une quelconque des revendications 1 à 7, le procédé comprenant les étapes consistant à :
former un revêtement précurseur sur le premier ou le second substrat de verre (4, 8) ;
chauffer le revêtement précurseur et ledit substrat de verre (4, 8) à une température déterminée pendant une période de temps pour à la fois traiter thermiquement ledit substrat de verre (4, 8) et provoquer une séparation de phase dans le revêtement précurseur, dans lequel le traitement thermique dudit substrat de verre comprend au moins l'un d'un pliage dudit substrat de verre ou d'une trempe dudit substrat de verre ; et
graver le revêtement précurseur pour fournir le premier revêtement nanostructuré (10,62), **caractérisé en ce que**
la gravure comprend : une gravure partielle du revêtement précurseur avec un premier agent de gravure ; un retrait du premier agent de gravure ; une gravure supplémentaire du revêtement précurseur avec un second agent de gravure plus faible que le premier agent de gravure ; et un retrait du second agent de gravure ;
le revêtement précurseur comprend des phases riches en silice et des phases riches en borate de sodium ; et
le procédé comprend en outre l'application du film de passivation contenant du SiO₂, du TiO₂ ou du ZrO₂ entre le revêtement précurseur et ledit substrat de verre.

10. Procédé selon la revendication 9, dans lequel le traitement thermique dudit substrat de verre (4, 8) comprend la trempe dudit substrat de verre, dans lequel la séparation de phase du revêtement précurseur se produit pendant que ledit substrat de verre (4, 8) et le revêtement précurseur sont chauffés, puis ledit substrat de verre et ledit revêtement précurseur sont refroidis pour tremper ledit substrat de verre.

11. Procédé selon les revendications 9 et 10, dans lequel le revêtement nanostructuré (10, 62) présente une fonctionnalité antiréfléchissante et le revêtement nanostructuré comprend des nanopores à l'intérieur du revêtement nanostructuré après la gravure.

12. Procédé selon la revendication 11, dans lequel la gravure comprend l'étape consistant à amener la taille des nanopores à diminuer à partir d'une surface de revêtement vers ledit substrat de verre.

13. Procédé selon l'une quelconque des revendications 9 à 12, dans lequel la gravure comprend la détermination d'une profondeur de gravure pour commander des tailles de particules d'une surface nanostructurée du revêtement nanostructuré (10, 62).
